# EUROPEAN PATENT SPECIFICATION

(11) **EP 1 957 330 B1**
(45) Date of publication and mention of the grant of the patent: **21.09.2011**
(21) Application number: 06795251.5
(22) Date of filing: 10.08.2006
(51) Int. Cl.: B60R 25/02, B60R 25/04

(54) **STEERING LOCK WITH A CHIP , COMMUNICATING WITH A SWITCHBOARD**
LENKSCHLOSS MIT EINEM MIT EINER SCHALTTAFEL KOMMUNIZIERENDEN CHIP
SERRURE ANTIVOL SUR DIRECTION DOTEE D'UNE PUCE, COMMUNIQUANT AVEC UN TABLEAU DE CONTROLE

(30) Priority: 03.11.2005 IT BA20050038
(43) Date of publication of application: 20.08.2008
(73) Proprietor: Selicato, Pietro, 70014 Conversano (BA) (IT)
(72) Inventor: Selicato, Pietro, 70014 Conversano (BA) (IT)
(74) Representative: Russo, Dimitri
(86) International application number: PCT/IB2006/002222
(87) International publication number: WO 2007/052097

(56) References cited:
- DE-A1- 10 118 298
- DE-A1- 10 332 533
- DE-A1- 19 531 178

## Description

### DESCRIPTION

Present invention relates to an electro-mechanical anti-theft device suitable both to inhibit rotation of steering axis of a motor vehicle and to interrupt feeding of necessary electric switchboards for a correct operation of the same motor vehicle ,according to the subject-matter of claim 1.

In more details, in relation to this last function, anti-theft device has the purpose to protect a CHIP whose purpose is either to supply or to negate consensus to supply electronic switchboards of a motor vehicle.

Anti-theft device is started by means of a mechanical key that acts on a suitable mechanical device and stops the steering axis rotation through action of a piston pin and, at the same time, by either closing or not closing or opening a suitable circuit that negates consensus to respective switchboard.

The document DE 103 32 533 A discloses the preamble of claim 1.

As well known, there are many steering axis lock devices which are also provided with other functions, first of all those assembled as standard items in motor vehicles. These, in fact, have usually a double function, the first one is that to lock steering axis rotation and the second one, at same time with the first action, to allow motor vehicle ignition.

These functions are driven by only one mechanical key that, when extracted, from one side starts a mechanical device that displaces a ratchet that engages a grooved bushing and it is connected with steering axis and, from an other side, starts rotation of a key device switching off ignition contact of main key.

A few standard more elaborate steering axis lock devices, include in a mechanical key a transponder capable to talk with a switchboard whose function is to either allow or not to allow motor ignition in order to protect motor vehicle from a not authorized use.

There are also a series of steering locking devices, of an auxiliary type, which were designed mainly to solve problems which are connected to fragility of key device which is assembled as standard item by manufacturing enterprises.

Said devices provide as the first ones to lock steering axis by means of introduction of a padlock provided with a piston pin, but compared with those assembled as standard item, they are made with steel which is very resistant to breaking.

A few of these steering locking devices of this last type provide also insertion in protection part of a micro switch in order to interrupt contact set-up by key at ignition time, consequently inhibiting, vehicle ignition in case of a starting attempt with anti-theft device inserted.

Standard steering locking devices assembled in motor vehicles show a series of problems first of all those connected with their small mechanical resistance to breaking; as a matter of fact, housings designed to contain the device are generally made of breakable materials like aluminium alloys or of plastic materials.

Steering lock devices of last generation assembled as standard on the contrary, even providing the use of a transponder inside the key, are also equally evadable in the same time when it is possible to get into motor housing of motor vehicle.

In this case it is as a matter of fact sufficient to substitute controlled electronic switchboard with another one of the same type in order to allow starting of motor. As far as supplementary steering locking devices, these solve the problem of mechanical resistance owing to use a protected cylinder but, at the same time, by cutting or someway taking out this cylinder, it is possible to disconnect the locking piston pin and in this way making the steering wheel free to rotate.

Furthermore application of a micro switch inside this device whose function is that of breaking motor supply of motor vehicle, does not solve any problem because it is sufficient to short circuit cables down stream of same micro switch in order to allow starting of vehicle.

Device which is the object of present patent solves the described problems, by giving an anti-theft device for motor vehicles with resistance and efficiency specification of a supplementary anti-theft steering lock device, to which action of a CHIP Dallas type is associated that communicates by a serial I-Wire Net® protocol, suitable to manage input signals of vehicle switchboards.

Purpose of present device is therefore that of supplying an anti-theft device suitable to inhibit motor vehicle switchboards in which it is assembled, also in case of total or partial removal of protected cylinder that includes steering lock device and CHIP.

A further advantage is to be found in the fact that CHIP, because it is inside the same auxiliary steering lock device, it is protected from the same protection without any necessity to use further protection containers.

Finally, a further advantage with reference to anti-theft devices of known electronic types, is to be found in the fact that protection device, as it is designed, does not interfere with other electronic devices assembled as standard in motor vehicle and that allow its working.

These purposes are obtained by device object of present invention, that is described in the following, in a preferred embodiment which is not to be limitative to further developments within patent range, with help of four drawings in enclosed tables that describe following figures:

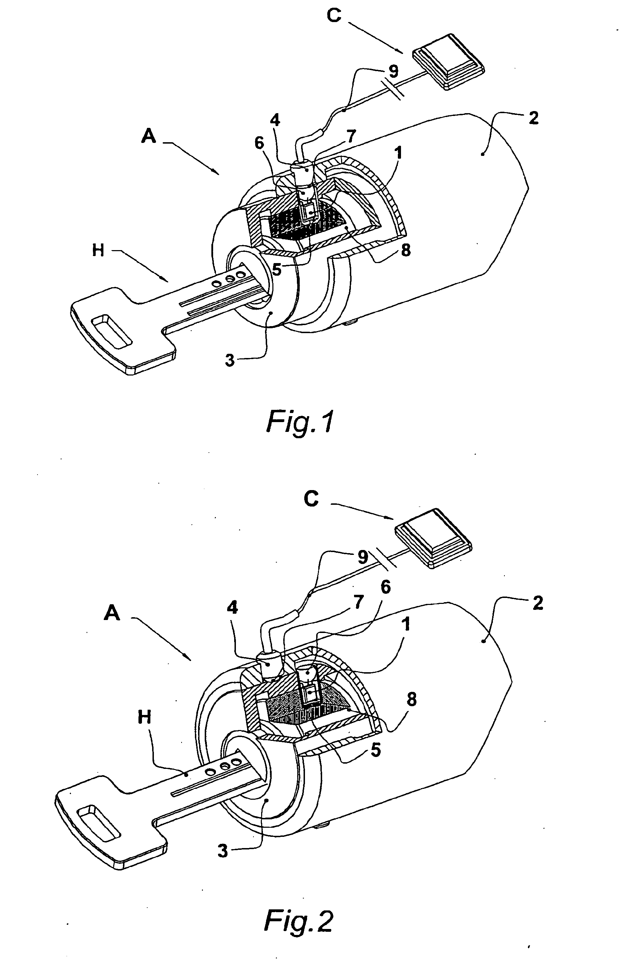

Fig. 1 an axonometric view of device object of present invention, with a few parts partially taken out and in the state of disconnected anti-theft device;
Fig. 2 an axonometric view of the whole device with a few parts partially taken away and in the state of anti-theft device connected;

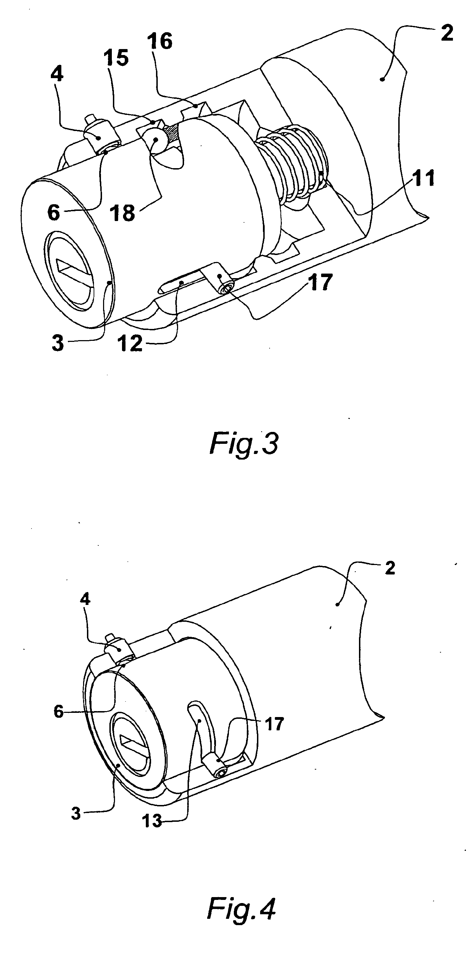

Fig. 3 an axonometric view of device with a few parts partially taken out, in which CHIP feeler-contact alignment is obtained by an axial movement of moving cylinder.
Fig. 4 an axonometric view of device with a few parts partially taken out, in which alignment of CHIP contact-feeler is obtained by rotation of moving cylinder;
Fig. 5A a detailed view of a further embodiment of execution of contact between feeler and integrated circuit is obtained by means of a small flexible tongue, when circuit is closed;
Fig. 5B same view of figure 5A, with an open circuit contact;
Fig. 6A a detailed view of an other embodiment of contact between feeler and integrated circuit carried out by a small fixed tongue and feeler with a reaction sphere, in condition of closed circuit;
Fig. 6B same view of figure 6A but with open circuit;
Fig. 7 a block diagram that describes how CHIP acts on controlled switchboard.

Device object of present invention is made of an electromechanical anti-theft device made of a steering lock device A in which protection is housed a CHIP 1 which has function to negate or not to negate consensus to electronic switchboards C which are necessary to operation of motor vehicles.

Device is made of a fixed protected body 2 connected to housing of steering columns by means of soldering and which has purpose of housing in its inside a second moving body 3 in which it is inserted, by protecting it, a CHIP 1; in a preferred embodiment both external body 2 and that moving inside 3 are of a cylindrical shape and for purpose to create motor vehicle steering axis lock, said moving cylinder 3 is provided at its end of a small piston 11 suitable to be connected to a bushing which is connected and coaxial to steering axis.

As above mentioned, it is housed in a radial way inside the fixed body 2 a mechanical feeler 4 for the purpose to detect CHIP 1 code and to send it to switchboard C by means of a connection 9.

In a preferred embodiment, for the purpose to connect moving body 2 to fixed body 3, in inside surface of moving same body 2 are obtained two circular seats 15 and 16 at a suitable distance between them; the lower one 16 for rest times of moving cylinder 3, the other higher one 15 necessary to stop the same in position of connected steering lock.

Mechanical stop of moving cylinder 3 with protected cylinder 2 is designed by using one or more spheres 18 that are housed in mobile cylinder 3 and get out of the same of necessary length in order to connect to holes 15 and 16 of protected cylinder 2; spheres 18, in their turn, are reaction driven by a device driven by a lock 8 with a mechanical key 14.

Axial range of moving cylinder 3 can be found by a screw 17 introduced into fixed cylinder 2 whose end gets into inside of the same to get into a buttonhole 13 designed on external surface of moving cylinder 3.

Miniature CHIP 1, in a preferred embodiment is housed inside a mechanical cylindrical feeler 5 threaded outside and closed at its upper end by a conducting tip 6. Moving cylinder 3, by making its way in protected body 2, carries together mechanical feeler 5 containing in its inside CHIP 1.

In order to make steering wheel lock and inhibit switchboard C, by starting from stop position or when moving cylinder 3 is partially taken out, it will be sufficient to insert mechanical steering lock A by compelling mobile cylinder 3 to displace axially along protected cylinder 2; displacement of moving cylinder 3 will cause displacement of feeler 5 with inside its CHIP I thus causing in the same way interruption of same circuit which starts at controlled switchboard C.

CHIP 1 is connected by means of its contacts respectively to tip 6 and to surface of threaded container 5; for this purpose same tip 6 is electrically insulated from said container.

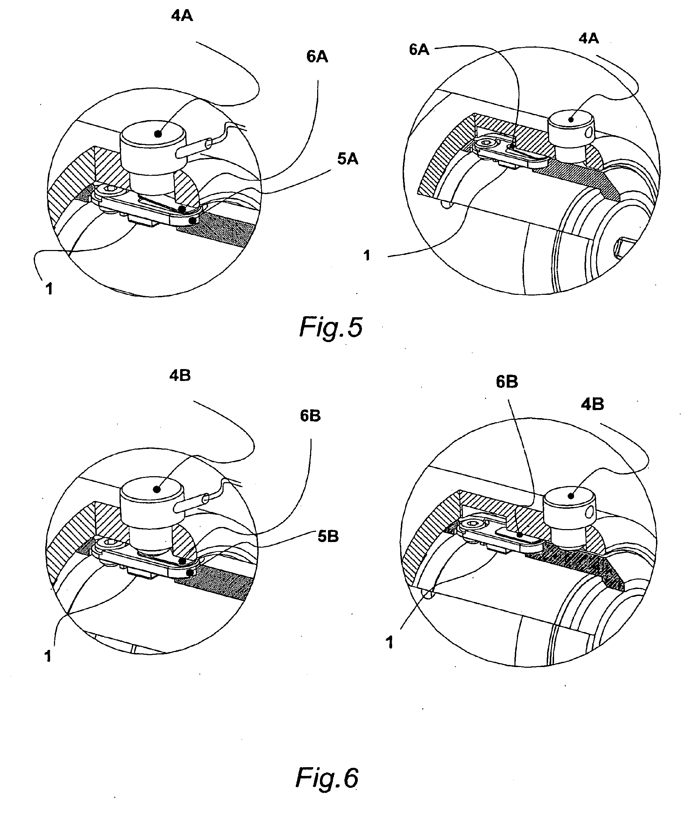

In a further embodiment, described in figure 5, reading of code of CHIP 1 is carried out by means of a mechanical feeler including a small mechanical tongue 6a slightly taken up with reference to point of support. When anti-theft device is disconnected small tongue 6a will contact feeler 4a and close circuit.

Reading of CHIP 1 code can, finally, be done also by means of a further type of contact in which metal foil 6b is fixed, while feeler 4b shows a tip which has a reaction by a spring.

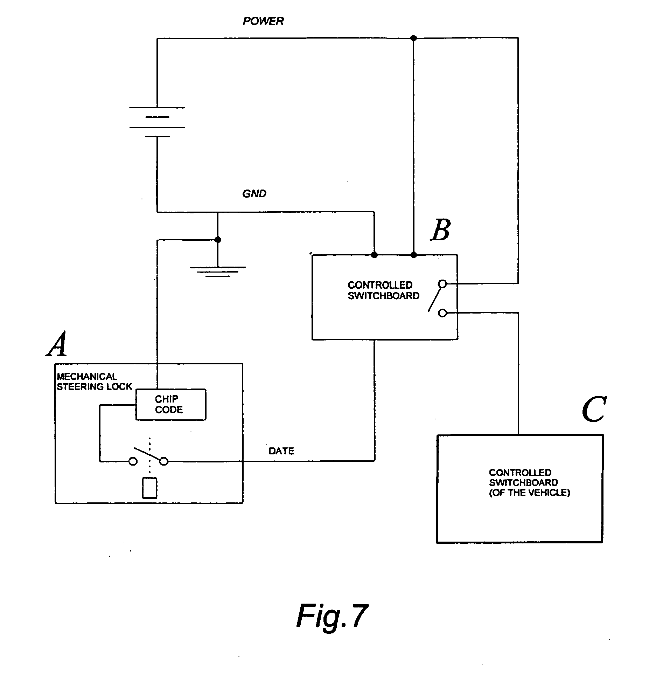

As described in figure 7, signal coming from CHIP 1 is coded by an intermediate switchboard B that decodes said signal and, in case this last one is positive, it will provide to supply switchboard controlled by motor vehicle with a consequent possibility of ignition of same motor vehicle.

It is consequent that in case of breaking by means of a cut and consequent taking out of protected cylinder 2, it will not be more possible to make reading of code of CHIP 1 and as a result controlled switchboard C will not be more capable to operate because it has no supply.

## Claims

1. Anti-theft device adapted to mechanically lock the steering axis rotation of a steering column and to inhibit operation of an electronic switchboard (C) of a motor vehicle, including a mechanical steering lock (A) necessary to stop the steering axis rotation, said mechanical steering lock (A) formed of a protected fixed body (2) applied externally to the column and of a moving body (3) bound to move inside the protected fixed body (2), making either axial movements or rotations, said moving body (3) being driven by a lock (8),
**characterized in that**:
- the moving body (3), which is able to lock the steering axis, has a CHIP (1) inside It that communicates through a serial protocol I-wire Net®, able to either close or to open a circuit that supplies energy to the electronic switchboard (C) of the motor vehicle;
- the CHIP (1) gives a code based on the position of the mechanical steering lock (A);
- communication between the CHIP (1) and the electronic switchboard (C) takes place through an intermediate switchboard (B) able to read the code coming from the CHIP (1) with the serial protocol I-Wire Net®;
- the code coming from the CHIP (1) can reach the electronic switchboard (C) only if the mechanical steering lock (A) is not inserted, when the contacts (4, 5) are aligned so that the circuit is closed; said contacts (4, 5) being respectively positioned on the protected fixed body (2) and on the moving body (3).

2. Anti-theft device of claim (1), **characterized in that** the contact (5), which contains the CHIP (1), is formed externally by an electrical conductor cylindrical body, and whose tip (6) is a conductor which is insulated from the moving body (3); the second contact (4) formed externally by an electrical conductor cylindrical body, is radially fixed to the protected fixed body (2) and is externally made of insulating material with a conductor tip (7) in order to read In alignment conditions the code from the CHIP (1).

3. Anti-theft device of previous claims, **characterized in that** in a second preferred embodiment, the closing of the circuit takes place between a bakelite plate for printed circuits (5a, 5b), wherein one end of the plate contains the CHIP (1), and the other end contains a moving or fixed tongue (6a, 6b).

## Patentansprüche

1. Diebstahlsicherung, die so angepasst ist, dass die Rotation einer Lenkachse die Lenksäule mechanisch verriegelt und die Inbetriebnahme einer elektronischen Schaltanlage (C) eines Kraftfahrzeuges blockiert, umfassend einen mechanischen Lenkeinschlag (A), der notwendig ist um die Drehung der Lenkachse und den mechanischen Lenkeinschlag (A) zu stoppen. Der mechanische Lenkeinschlag (A) besteht aus einem geschützten festen Körper (2), der sich extern auf die Säule auswirkt, und aus einem verbundenen bewegenden Körper (3), zur Bewegung entweder axial oder rotatorisch innerhalb des geschützten festen Körpers (2); der bewegende Körper (3) wird durch eine Schleuse (8) angefahren,
**dadurch gekennzeichnet, dass**
- der bewegende Körper (3), der in der Lage ist, die Lenkachse zu sperren, hat im Inneren einen CHIP (1) der über ein serielles Protokoll 1-wire Net® in Verbindung ist, das in der Lage ist, eine Schaltung die Energie an die elektronische Schalttafel (C) eines Kraftfahrzeugs versorgt, entweder zu schließen oder zu öffnen;
- der CHIP (1) gibt einen Code basierend auf der Position des mechanischen Lenkeinschlags (A);
- die Verbindung zwischen dem CHIP (1) und der elektronischen Schalttafel (C) erfolgt über eine zwischenliegende Schalttafel (B) die es ermöglicht, den Code vom CHIP (1) mit dem seriellen Protokoll 1-Wire Net ® zu lesen;
- der kommende Code von CHIP (1) kann die elektronische Schalttafel (C) nur erreichen, wenn der mechanische Lenkeinschlag (A) nicht eingesetzt ist, und die Kontakte (4, 5) so ausgerichtet sind, dass der Stromkreis geschlossen ist. Die Kontakte (4, 5) sind jeweils auf dem geschützten festen Körper (2) und dem bewegenden Körper (3) positioniert.

2. Diebstahlsicherung nach dem Anspruch (1), **dadurch gekennzeichnet, dass** den Kontakt (5), welcher den CHIP (1) beinhaltet, extern durch einen elektrisch leitenden zylindrischen Körper geformt ist, und dessen Spitze (6) einen Leiter ist, der von dem bewegenden Körper (3) isoliert ist; der zweite Kontakt (4), welcher extern durch einen elektrisch leitenden zylindrischen Körper geformt ist, ist radial an dem geschützten festen Körper (2) befestigt und besteht äußerlich aus einem isolierenden Material mit einer leitenden Spitze (7), um den Code vom CHIP (1) unter Ausrichtungsbedingungen lesen zu können.

3. Diebstahlsicherung nach dem vorhergehenden Anspruch, **dadurch gekennzeichnet, dass** in einer zweiten bevorzugten Ausführungsform die Schließung der Schaltung zwischen einer Bakelit Platte für gedruckte Schaltungen (5a, 5b) erfolgt, wobei ein Plattenende einen CHIP (1) umfasst, und das andere Plattenende eine bewegliche oder feste Zunge (6a, 6b) umfasst.

## Revendications

1. Dispositif antivol adapté pour bloquer mécaniquement la rotation de l'axe de direction d'une colonne de direction et pour inhiber le fonctionnement d'un commutateur électronique (C) d'un véhicule à moteur, incluant un blocage mécanique de direction (A) nécessaire pour arrêter la rotation de l'axe de direction, ledit blocage mécanique de direction (A) formé d'un corps fixe protégé (2) appliqué de façon externe à la colonne et d'un corps mobile (3) attaché pour se déplacer à l'intérieur du corps fixe protégé (2), faisant ou des mouvements ou des rotations axiaux, ledit corps mobile (3) étant entraîné par un verrou (8),
**caractérisé en ce que** :
- le corps mobile (3), qui est capable de verrouiller l'axe de direction, renferme une PUCE (1) à l'intérieur qui communique via un protocole série 1-wire Net®, capable ou de fermer ou d'ouvrir un circuit qui fournit de l'énergie au commutateur électronique (C) du véhicule à moteur ;
- la PUCE (1) donne un code basé sur la position du blocage mécanique de direction (A) ;
- la communication entre la PUCE (1) et le commutateur électronique (C) se déroule via un commutateur intermédiaire (B) capable de lire le code venant de la PUCE (1) avec le protocole série 1-Wire Net® ;
- le code venant de la PUCE (1) peut atteindre le commutateur électronique (C) uniquement si le blocage mécanique de direction (A) n'est pas inséré, lorsque les contacts (4, 5) sont alignés de sorte que le circuit est fermé ; lesdits contacts (4, 5) étant respectivement positionnés sur le corps fixe protégé (2) et sur le corps mobile (3).

2. Dispositif antivol selon la revendication (1), **caractérisé en ce que** le contact (5), qui contient la PUCE (1), est formé de façon externe par un corps cylindrique conducteur électrique, et dont l'extrémité (6) est un conducteur qui est isolé du corps mobile (3) ; le deuxième contact (4) formé de façon externe par un corps cylindrique conducteur électrique, est fixé de façon radiale au corps fixe protégé (2) et est constitué à l'extérieur d'un matériau isolant avec une extrémité conductrice (7) afin de lire dans des conditions d'alignement le code de la PUCE (1).

3. Dispositif antivol selon les revendications précédentes, **caractérisé en ce que** dans un deuxième mode de réalisation préféré, la fermeture du circuit a lieu entre une plaque de Bakélite pour circuits imprimés (5a, 5b), dans lequel une extrémité de la plaque contient la PUCE (1), et l'autre extrémité contient une languette mobile ou fixe (6a, 6b).
